# EUROPEAN PATENT APPLICATION

(11) **EP 1 693 820 A1**
(43) Date of publication of application: **23.08.2006**
(21) Application number: 06290275.4
(22) Date of filing: 17.02.2006
(51) Int. Cl.: G09G 3/28

(54) **Plasma display apparatus and driving method thereof**

(30) Priority: 18.02.2005 KR 2005013825
(71) Applicant: LG Electronics Inc., Seoul 150-721 (KR)
(72) Inventor: Kwak, Joon Woon Gongjak Apt. 310-406, Anyang-si Gyeonggi-do (KR); Moon, Seong Hak, Guro-gu Seoul (KR)
(74) Representative: Vignesoult, Serge L. M.

(57) **Abstract**

A plasma display apparatus and a driving method thereof are provided. The plasma display apparatus comprises a plasma display panel including a scan electrode and a sustain electrode, a scan driver and a sustain driver. The scan driver supplies a first pulse including a positive pulse and a negative pulse to the scan electrode during a sustain period. The sustain driver supplies a second pulse including a negative pulse of a magnitude different from a magnitude of the positive pulse of the first pulse and a positive pulse of a magnitude different from a magnitude of the negative pulse of the first pulse to the sustain electrode during the application of the first pulse to the scan electrode.

## Description

### BACKGROUND OF THE INVENTION

### Field of the Invention

This document relates to a display apparatus, and more particularly, to a plasma display apparatus and a method of driving the plasma display apparatus.

### Description of the Background Art

Recently, a plasma display apparatus has been widely considered together with a liquid crystal display (LCD), an organic electroluminescence display (OLED) and a field emission display (FED).

The plasma display apparatus comprises a plasma display panel for displaying an image and a driver for driving the plasma display panel.

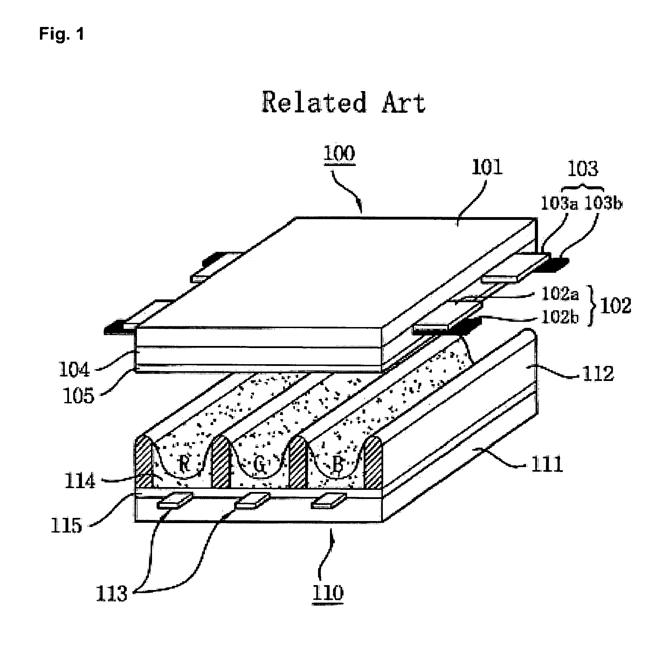

FIG. 1 shows a structure of a related art plasma display panel.

As shown in FIG. 1, the plasma display panel comprises a front panel 100 and a rear panel 110 which are coupled in parallel to be opposed to each other at a given distance therebetween. A plurality of scan electrodes 102 and a plurality of sustain electrodes 103 are formed in pairs on the front panel 100 to form a plurality of sustain electrode pairs. A plurality of address electrodes 113 are formed on the rear panel 110 to intersect the plurality of sustain electrode pairs.

The front panel 100 comprises a front glass substrate 101 on which the scan electrodes 102 and the sustain electrodes 103 are formed. The sustain electrode pair maintain light-emissions of cells by a mutual discharge between the scan electrode 102 and the sustain electrode 103 in one discharge cell. The scan electrode 102 and the sustain electrode 103 each comprise transparent electrodes 102a and 103a made of a transparent material and bus electrodes 102b and 103b made of a metal material such as Ag. An upper dielectric layer 104 is formed on an upper part of the sustain electrode pair to limit a discharge current and to provide insulation between the sustain electrode pairs. A protective layer 105 depositing with MgO is formed on an upper surface of the upper dielectric layer 104 to facilitate discharge conditions.

The rear panel 110 comprises a rear glass substrate 111 on which the address electrode 113 is formed. Data is written by a writing discharge between the scan electrode 102 and the address electrode 113. A lower dielectric layer 115 is formed on an upper part of the address electrode 113 to provide insulation between the address electrodes 113. A plurality of stripe-type barrier ribs 112 are formed in parallel on the lower dielectric layer 115 to form a plurality of discharge cells. Red (R), green (G) and blue (B) phosphors 114 are coated between an upper part of the lower dielectric layer 115 and the barrier ribs 112 to emit visible light.

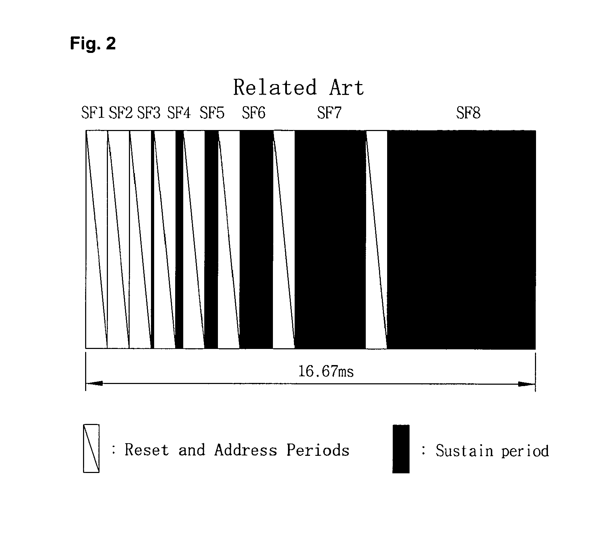

A method of representing gray scale by driving the plasma display panel having the above-described structure is shown in FIG. 2.

FIG. 2 shows a method of representing gray scale of the related art plasma display panel of FIG. 1. As shown in FIG. 2, one frame in the plasma display panel is divided into several subfields whose number of light-emissions are different from one another. Each of the subfields comprises a reset period for initializing all cells, an address period for selecting cells to be discharged and a sustain period for representing gray scale in accordance with number of discharges. For example, in a case of representing 256-level gray scale, a frame period (16.67 ms) corresponding to 1/60 sec is divided into eight subfields SF1 to SF8. The eight subfields SF1 to SF8 each comprise a reset period, an address period and a sustain period.

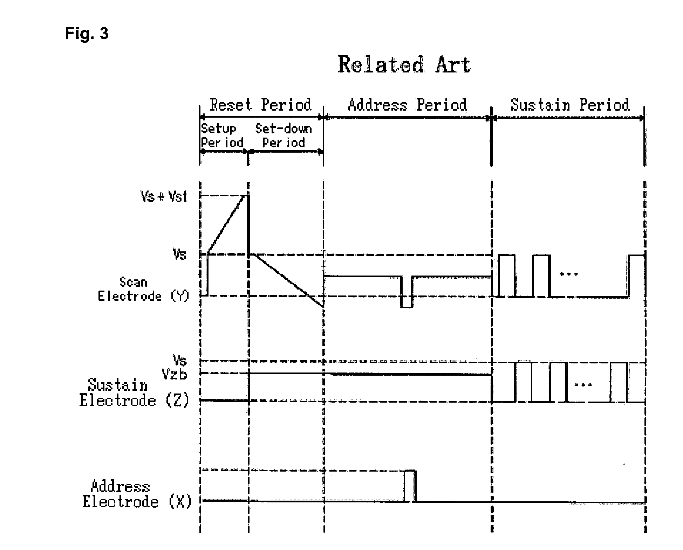

The duration of the reset period in a subfield is equal to the duration of the reset periods in the remaining subfields. The duration of the address period in a subfield is equal to the duration of the address periods in the remaining subfields. The voltage difference between an address electrode and a transparent electrode, which is a scan electrode, generates an address discharge for selecting the cells to be discharged. The sustain period increases in a ratio of 2ⁿ (n = 0, 1, 2, 3, 4, 5, 6, 7) in each of the subfields. As described above, since the duration of the sustain period changes in each of the subfields, gray scale is represented by adjusting the sustain period of each of the subfields, that is, number of sustain discharges. A driving waveform depending on a driving method of the plasma display panel is shown in FIG. 3.

FIG. 3 shows a driving waveform depending on a driving method of a related art plasma display panel.

As shown in FIG. 3, the plasma display panel is driven by dividing each of subfields into a reset period for initializing all cells, an address period for selecting cells to be discharged, and a sustain period for discharge maintenance of the selected cells.

In the reset period, a rising waveform is simultaneously applied to all scan electrodes Y during a setup period. A weak dark discharge is generated within the discharge cells of the entire screen by the rising waveform. By performing the weak dark discharge, positive wall charges are accumulated on address electrodes X and sustain electrodes Z and negative wall charges are accumulated on the scan electrodes Y.

In a set-down period, a falling waveform which falls from a positive voltage lower than a peak voltage of the rising waveform to a specific voltage of a ground level voltage or less is supplied to the scan electrodes Y to generate a weak erasure discharge within the cells. The weak erase discharge sufficiently erases the wall charges excessively accumulated on the scan electrode Y.

By performing the weak erase discharge, the wall charges uniformly remain within the cells to the degree that there is the generation of a stable address discharge.

In the address period, a negative scan pulse is sequentially applied to the scan electrodes Y and, at the same time, a positive data pulse synchronized with the scan pulse is applied to the address electrodes X. While the voltage difference between the negative scan pulse and the positive data pulse is added to the wall charges produced during the reset period, the address discharge is generated within the discharge cells to which the data pulse is applied. The wall charges necessary for a sustain discharge when applying a sustain voltage Vs are formed within the cells selected by performing the address discharge. A positive voltage Vzb is supplied to the sustain electrode Z during the set-down period and the address period to decrease the voltage difference between the sustain electrode Z and the scan electrode Y. Accordingly, an erroneous discharge between the sustain electrode Z and the scan electrode Y is prevented.

In the sustain period, a sustain pulse is alternately supplied to the scan electrode Y and the sustain electrode Z. While the wall voltage within the cells selected by performing the address discharge is added to the sustain pulse, a sustain discharge, that is, a display discharge, is generated between the scan electrode Y and the sustain electrode Z whenever the sustain pulse is applied.

The plasma display panel in one subfield is driven by the above-described processes.

Considering the sophisticated discharge mechanism of the plasma display panel, the driving processes of the plasma display panel in one subfield include several problems. In particular, the sustain discharge performed after the address discharge has the following problems.

In the address period, as described above, while the positive voltage Vzb is applied to the sustain electrode Z to prevent the erroneous discharge, the negative scan pulse and positive data pulse are applied to the scan electrode Y and the address electrode X, respectively. As a result, the address discharge is generated. The positive wall charges and the negative wall charges are accumulated on the scan electrode Y and the sustain electrode Z, immediately after performing the address discharge.

Afterwards, the sustain discharge is generated during the sustain period by adding wall voltages of the wall charges accumulated on each of the scan electrode Y and the sustain electrode Z to the sustain voltage Vs.

However, the difference between the amount of positive wall charges on the scan electrode Y and the amount of negative wall charges on the sustain electrode Z, immediately before generating a first sustain discharge, is necessarily generated due to the difference between generation time points of a last address discharge and the first sustain discharge and the difference between internal and external environments of a discharge space.

As described above, the difference in the amount of positive wall charges and negative wall charges on each of the scan electrode Y and the sustain electrode Z generates the unstable sustain discharge. Accordingly, a driving efficiency of the plasma display panel is reduced.

### SUMMARY OF THE INVENTION

Accordingly, an object of the present invention is to solve at least the problems and disadvantages of the background art.

Embodiments of the present invention provide a plasma display apparatus for generating a stable sustain discharge when driving a plasma display panel, and a driving method thereof.

According to an aspect, there is provided a plasma display apparatus comprising a plasma display panel comprising a scan electrode and a sustain electrode, a scan driver for supplying a first pulse including a positive pulse and a negative pulse to the scan electrode during a sustain period, and a sustain driver for supplying a second pulse including a negative pulse of a magnitude different from a magnitude of the positive pulse of the first pulse and a positive pulse of a magnitude different from a magnitude of the negative pulse of the first pulse to the sustain electrode during the application of the first pulse to the scan electrode.

According to another aspect, there is provided a plasma display apparatus comprising a plasma display panel comprising a scan electrode and a sustain electrode, a scan driver for supplying a first pulse including a positive pulse and a negative pulse to the scan electrode during a sustain period, and a sustain driver for supplying a second pulse including a negative pulse of the width different from the width of the positive pulse of the first pulse and a positive pulse of the width different from the width of the negative pulse of the first pulse to the sustain electrode during the application of the first pulse to the scan electrode.

The plasma display apparatus and the driving method thereof according to the embodiments of the present invention generate the stable sustain discharge when driving the plasma display panel, thereby improving a driving margin and a driving efficiency of the plasma display panel.

### BRIEF DESCRIPTION OF THE DRAWINGS

The invention will be described in detail with reference to the following drawings in which like numerals refer to like elements.

FIG. 1 shows a structure of a related art plasma display panel;

FIG. 2 shows a method of representing gray scale of the related art plasma display panel of FIG. 1;

FIG. 3 shows a driving waveform depending on a driving method of a related art plasma display panel;

FIG. 4 shows a structure of a plasma display apparatus according to a first embodiment of the present invention;

FIGS. 5a and 5b illustrate a driving method of the plasma display apparatus according to the first embodiment of the present invention;

FIG. 6 illustrates a driving method of the plasma display apparatus according to a modification of the first embodiment of the present invention;

FIGS. 7a and 7b illustrate a driving method of another plasma display apparatus according to the first embodiment of the present invention;

FIGS. 8a and 8b illustrate a driving method of a plasma display apparatus according to a second embodiment of the present invention; and

FIG. 9 illustrates a driving method of the plasma display apparatus according to a modification of the second embodiment of the present invention.

### DETAILED DESCRIPTION OF PREFERRED EMBODIMENTS

Preferred embodiments of the present invention will be described in a more detailed manner with reference to the drawings.

A plasma display apparatus according to one embodiment of the present invention comprise a plasma display panel comprising a scan electrode and a sustain electrode, a scan driver for supplying a first pulse including a positive pulse and a negative pulse to the scan electrode during a sustain period, and a sustain driver for supplying a second pulse including a negative pulse of a magnitude different from a magnitude of the positive pulse of the first pulse and a positive pulse of a magnitude different from a magnitude of the negative pulse of the first pulse to the sustain electrode during the application of the first pulse to the scan electrode.

The voltage difference between the positive pulse initially applied to the scan electrode and the negative pulse initially applied to the sustain electrode is more than the voltage differences between the remaining positive pulse applied to the scan electrode and the remaining negative pulse applied to the sustain electrode during the sustain period.

The voltage difference between the positive pulse applied to the scan electrode and the negative pulse applied to the sustain electrode and the voltage difference between the negative pulse applied to the scan electrode and the positive pulse applied to the sustain electrode each are controlled in accordance with weight values of subfields.

Each of the voltage difference between the positive pulse applied to the scan electrode and the negative pulse applied to the sustain electrode and the voltage difference between the negative pulse applied to the scan electrode and the positive pulse applied to the sustain electrode in at least one of three low-level gray subfields is more than each of the voltage difference between the positive pulse applied to the scan electrode and the negative pulse applied to the sustain electrode and the voltage difference between the negative pulse applied to the scan electrode and the positive pulse applied to the sustain electrode in the remaining subfields.

An application time point of the positive pulse applied to the scan electrode is substantially the same as an application time point of the negative pulse applied to the sustain electrode, and An application time point of the negative pulse applied to the scan electrode is substantially the same as an application time point of the positive pulse applied to the sustain electrode.

A voltage of the negative pulse applied to each of the scan electrode and the sustain electrode is substantially equal to a lowest voltage of a falling pulse applied to the scan electrode prior to the sustain period.

A voltage of the positive pulse applied to each of the scan electrode and the sustain electrode is substantially equal to a bias voltage applied to the sustain electrode.

A ground level voltage is maintained between the positive pulse and the negative pulse applied to the scan electrode and the sustain electrode.

Hereinafter, exemplary embodiments of the present invention will be described in detail with reference to the attached drawings.

<First Embodiment>

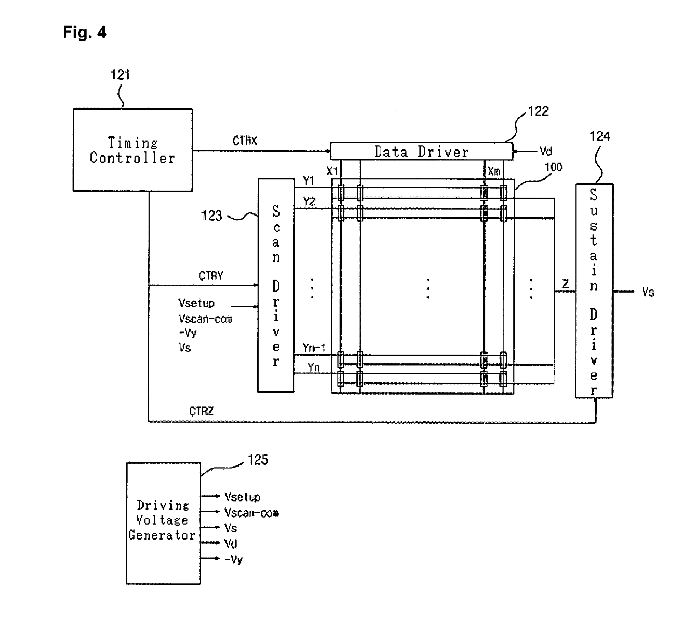

FIG. 4 shows a structure of a plasma display apparatus according to a first embodiment of the present invention.

As shown in FIG. 4, the plasma display apparatus according to the first embodiment of the present invention comprises a plasma display panel 100, a data driver 122, a scan driver 123, a sustain driver 124, a timing controller 121 and a driving voltage generator 125. The data driver 122 supplies data to address electrodes X1 to Xm formed on a lower substrate (not shown) of the plasma display panel 100. The scan driver 123 drives scan electrodes Y1 to Yn and the sustain driver 124 drives sustain electrodes Z being common electrodes. The timing controller 121 controls the data driver 122, the scan driver 123 and the sustain driver 124 when driving the plasma display panel 100. The driving voltage generator 125 supplies a necessary driving voltage to each of the drivers 122, 123 and 124.

An upper substrate (not shown) and the lower substrate of the plasma display panel 100 are coalesced with each other at a given distance. On the upper substrate, a plurality of electrodes, for example, the scan electrodes Y1 to Yn and the sustain electrodes Z are formed in pairs. On the lower substrate, the address electrodes X1 to Xm are formed to intersect the scan electrodes Y1 to Yn and the sustain electrodes Z.

The data driver 122 receives data, which is inverse-gamma corrected and error diffused in an inverse gamma correction circuit (not shown) and an error diffusion circuit (not shown) and then mapped to each of subfields in a subfield mapping circuit (not shown). The data driver 122 supplies the data, which is sampled and latched in response to a timing control signal CTRX supplied from the timing controller 121, to the address electrodes X1 to Xm.

Under the control of the timing controller 121, the scan driver 123 supplies a rising pulse and a falling pulse to the scan electrodes Y1 to Yn during a reset period. Further, the scan driver 123 sequentially supplies a scan pulse of a scan voltage -Vy to the scan electrodes Y1 to Yn during an address period. The scan driver 123 supplies a sustain pulse generated by an energy recovery circuit (not shown) installed in the scan driver 123 to the scan electrodes Y1 to Yn during a sustain period.

Under the control of the timing controller 121, the sustain driver 124 supplies a sustain pulse generated by an energy recovery circuit (not shown) installed in the sustain driver 124 to the sustain electrodes Z during a sustain period. At this time, the structure of the energy recovery circuit of the sustain driver 124 is the same as the structure of the energy recovery circuit of the scan driver 123. The energy recovery circuits of the sustain driver 124 and the scan driver 123 are alternately operated.

The sustain pulses which the scan driver 123 and the sustain driver 124 supply to the scan electrodes Y1 to Yn and the sustain electrodes Z during the sustain period are defined as follows.

The sustain pulse which the scan driver 123 supplies to the scan electrodes Y1 to Yn is called a first pulse. The first pulse includes a positive pulse and a negative pulse.

A pulse initially applied to the scan electrode is called an initial pulse and a pulse secondly applied to the scan electrode is called a final pulse.

The sustain pulse which the sustain driver 124 supplies to the sustain electrodes Z is called a second pulse. The second pulse includes a positive pulse and a negative pulse.

A pulse initially applied to the sustain electrode is called an initial pulse and a pulse secondly applied to the sustain electrode is called a final pulse.

The timing controller 121 receives a vertical/horizontal synchronization signal and a clock signal. The timing controller 121 generates timing control signals CTRX, CTRY and CTRZ for controlling operation timing and synchronization of each of the drivers 122, 123 and 124 in the reset period, the address period and the sustain period. The timing controller 121 supplies the timing control signals CTRX, CTRY and CTRZ to the corresponding drivers 122, 123 and 124 to control each of the drivers 122, 123 and 124.

The data control signal CTRX includes a sampling clock for sampling data, a latch control signal, and a switch control signal for controlling an on/off time of an energy recovery circuit and a driving switch element. The scan control signal CTRY includes a switch control signal for controlling an on/off time of the energy recovery circuit of the scan driver 123 and a driving switch element. The sustain control signal CTRZ includes a switch control signal for controlling on/off time of the energy recovery circuit of the sustain driver 124 and a driving switch element.

The driving voltage generator 125 generates a setup voltage Vsetup, a scan common voltage Vscan-com, a scan voltage -Vy, a sustain voltage Vs, and a data voltage Vd. The driving voltages may be changed in accordance with a composition of a discharge gas or a structure of the discharge cells.

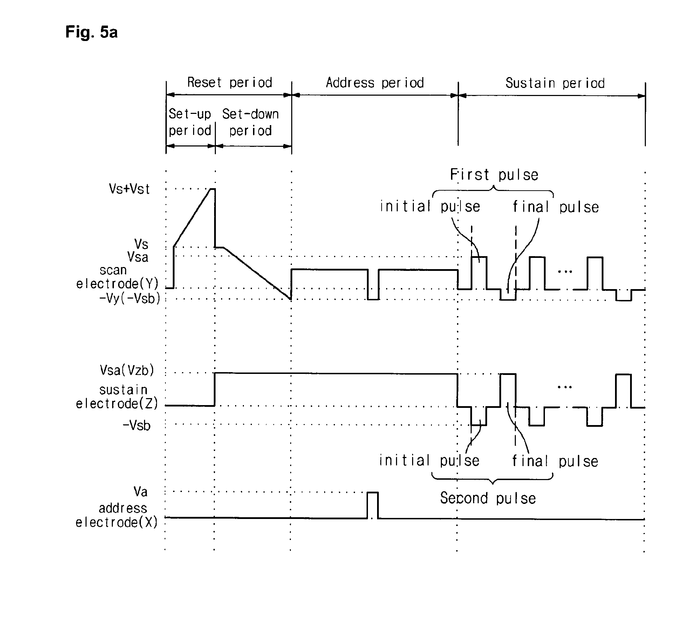

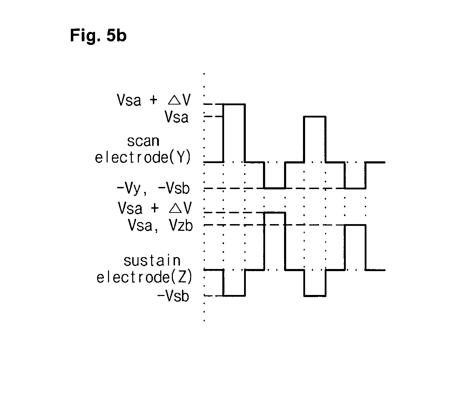

FIGS. 5a and 5b illustrate a driving method of the plasma display apparatus according to the first embodiment of the present invention.

As shown in FIG. 5a, the plasma display apparatus of the first embodiment of the present invention is driven by dividing each of subfields into a reset period for initializing all cells of the plasma display panel 100, an address period for selecting cells to be discharged and a sustain period for discharge maintenance of the selected cells.

The reset period is divided into a setup period for accumulating wall charges within the discharge cells and a set-down period for erasing the wall charges excessively accumulated within the discharge cells during the setup period.

A rising pulse, which gradually rises, is applied to all of the scan electrodes Y during the setup period to initialize all of the cells. A falling pulse, which gradually falls, is applied to all of the scan electrodes Y during the set-down period. A weak dark discharge is generated within the discharge cells of the entire screen of the plasma display panel by the application of the rising pulse during the setup period. The dark discharge generated during the setup period is called a setup discharge. By performing the setup discharge, positive wall charges are accumulated on the address electrodes X and the sustain electrodes Z and a large amount of negative wall charges are accumulated on the scan electrodes Y.

A weak dark discharge is again generated within the discharge cells of the entire screen of the plasma display panel by the application of the falling pulse during the set-down period. The dark discharge generated during the set-down period is called a set-down discharge. By performing the set-down discharge, the large amount of negative wall charges accumulated on the scan electrode are erased in a proper level. As a result, the wall charges uniformly remain within the cells to the degree that there is the generation of a stable address discharge.

In the address period, a positive data pulse and a negative scan pulse synchronized with the positive data pulse are applied to the address electrode X and the scan electrode Y, respectively. While the difference between voltages of the positive data pulse and the negative scan pulse is added to wall voltages of the wall charges formed on each of the scan electrode and the address electrode during the reset period, the address discharge is generated.

In the sustain period, when the amount of positive wall charges accumulated on the scan electrode Y at a time when the sustain period starts is less than the amount of negative wall charges accumulated on the sustain electrode Z at the time, the first pulse including the initial positive pulse and the final negative pulse is sequentially applied to the scan electrode Y. Further, the second pulse including the initial negative pulse and the final positive pulse is applied to the sustain electrode Z. At this time, an application time point of the second pulse is substantially the same as an application time point of the first pulse. A sustain discharge is generated by the supply of the first pulse and the second pulse.

At this time, a ground level voltage is maintained between the initial positive pulse and the final negative pulse applied to the scan electrode Y. Further, a ground level voltage is maintained between the initial negative pulse and the final positive pulse applied to the sustain electrode z.

The initial positive pulse and the initial negative pulse are applied at the substantially same application time point. Further, the final positive pulse and the final negative pulse are applied at the substantially same application time point.

At this time, a voltage Vsa of the initial positive pulse supplied to the scan electrode is adjusted to be more than an absolute value of a voltage -Vsb of the initial negative pulse supplied to the sustain electrode. Further, an absolute value of a voltage - Vsb of the final negative pulse supplied to the scan electrode during the sustain period is adjusted to be less than a voltage Vsa of the final positive pulse supplied to the sustain electrode.

As described above, the difference between the wall voltages of the scan electrode and the sustain electrode caused by the difference between the amount of wall charges of each of the scan electrode and the sustain electrode at the time when the sustain period starts is compensated by charging the voltages and the polarities of the first and second pulses applied to the scan electrode and the sustain electrode. Accordingly, the stable sustain discharge is generated.

As shown in FIG. 5b, the voltage difference between the initial positive pulse initially applied to the scan electrode and the initial negative pulse initially applied to the sustain electrode is different from the voltage difference between the remaining initial positive pulse applied to the scan electrode and the remaining initial negative pulse applied to the sustain electrode during the sustain period. Further, the voltage difference between the final negative pulse initially applied to the scan electrode and the final positive pulse initially applied to the sustain electrode is different form the voltage difference between the remaining final negative pulse applied to the scan electrode and the remaining final positive pulse applied to the sustain electrode during the sustain period.

More preferably, the voltage difference between the initial positive pulse initially applied to the scan electrode and the initial negative pulse initially applied to the sustain electrode is more than the voltage difference between the remaining initial positive pulse applied to the scan electrode and the remaining initial negative pulse applied to the sustain electrode during the sustain period. The voltage difference between the final negative pulse initially applied to the scan electrode and the final positive pulse initially applied to the sustain electrode is more than the voltage difference between the remaining final negative pulse applied to the scan electrode and the remaining final positive pulse applied to the sustain electrode during the sustain period.

This stabilizes the unstable sustain discharge caused by the wall charges unstably accumulated on the scan electrode and the sustain electrode during the address period.

The voltage difference between the initial positive pulse and the initial negative pulse and the voltage difference between the final negative pulse and the final positive pulse each are controlled in accordance with weight values of subfields. For example, in one frame including a plurality of subfields, the voltage difference between the initial positive pulse and the initial negative pulse and the voltage difference between the final negative pulse and the final positive pulse in at least one of low-level gray subfields of low-level gray weight are more than the voltage difference between the initial positive pulse and the initial negative pulse and the voltage difference between the final negative pulse and the final positive pulse in the subfields of gray weight different from the low-level scale weight, respectively. The low-level gray subfields of the low gray weight include a subfield of a lowest gray weight to a third subfield in ascending order.

This prevents the unstable sustain discharge in each of the subfields in accordance with the weight value.

Preferably, a voltage of the initial negative pulse and a voltage of the final negative pulse applied to the scan electrode or the sustain electrode during the sustain period is substantially equal to a lowest voltage of the falling pulse applied to the scan electrode during the set-down period. Preferably, a voltage of the initial positive pulse and a voltage of the final positive pulse is substantially equal to a bias voltage applied to the sustain electrode during the set-down period and the address period.

Accordingly, voltage sources of the pulses applied during the sustain period are identical with voltage sources of the pulses applied during the set-down period and the address period. As a result, the manufacturing cost of the plasma display apparatus decreases.

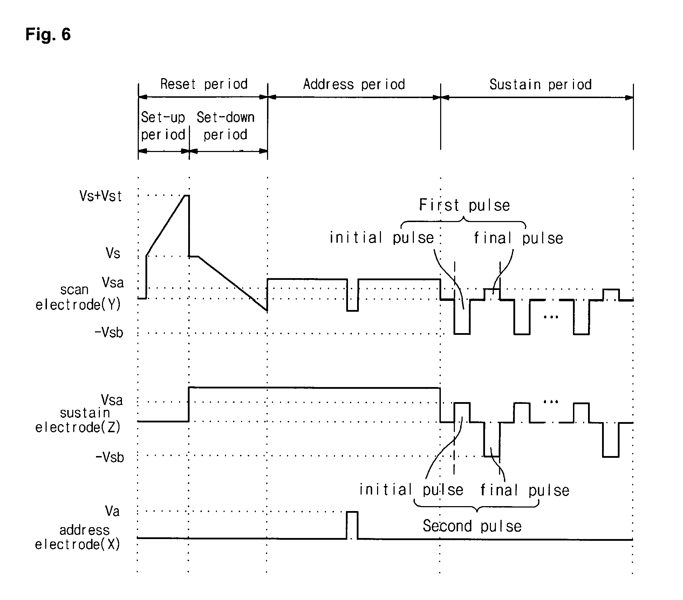

FIG. 6 illustrate a driving method of the plasma display apparatus when the amount of positive wall charges accumulated on the scan electrode at the time when the sustain period starts is more than the amount of negative wall charges accumulated on the sustain electrode at the time on driving the plasma display apparatus according to the first embodiment of the present invention.

In FIG. 6, driving waveforms applied during the reset period and the address period are the same as the driving waveforms applied during the reset period and the address period in FIG. 5a. Only, the first pulse including the initial positive pulse and the final negative pulse is sequentially applied to the scan electrode Y during the sustain period. The second pulse including the initial negative pulse and the final positive pulse is applied to the sustain electrode Z during the sustain period. An application time point of the first pulse is substantially the same as an application time point of the second pulse.

Since the sustain pulse applied during the sustain period in FIG. 6 is the same as the sustain pulse of FIGS. 5a and 5b, a description thereof is omitted.

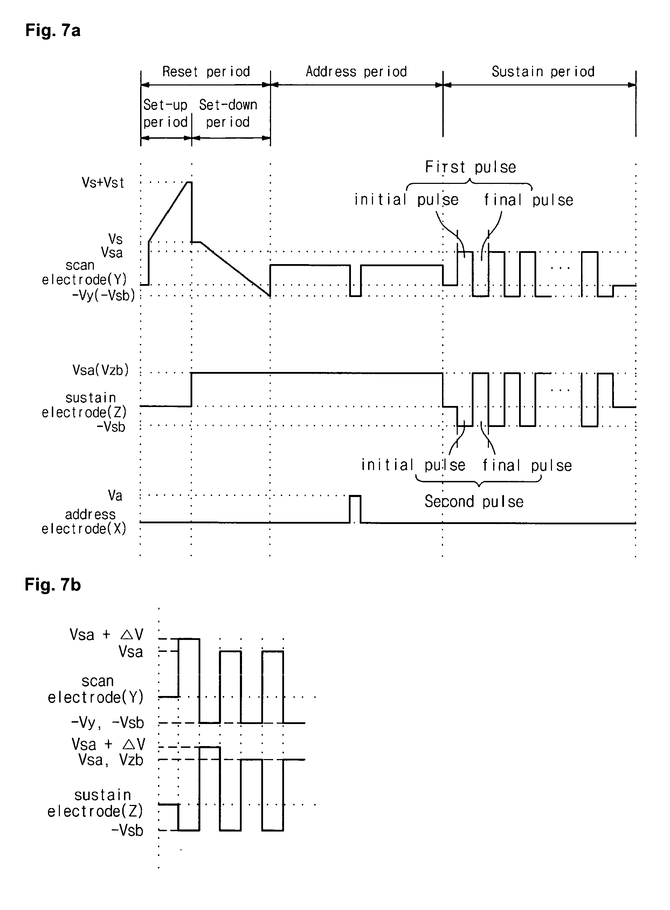

FIGS. 7a and 7b illustrate a driving method of another plasma display apparatus according to the first embodiment of the present invention.

The driving method of another plasma display apparatus according to the first embodiment of the present invention in FIGS. 7a and 7b is substantially the same as the driving method shown in FIGS. 5a and 5b. Only, after applying the initial positive pulse to the scan electrode during the sustain period, the final negative pulse is applied to the scan electrode without a maintenance period of a ground level voltage.
Although it is not shown in the drawings, another plasma display apparatus according to the first embodiment of the present invention is driven by the driving waveform of FIGS. 7a and 7b corresponding to FIG. 6.

A plasma display apparatus according to another embodiment of the present invention comprises a plasma display panel comprising a scan electrode and a sustain electrode, a scan driver for supplying a first pulse including a positive pulse and a negative pulse to the scan electrode during a sustain period and, a sustain driver for supplying a second pulse including a negative pulse of the width different from the width of the positive pulse of the first pulse and a positive pulse of the width different from the width of the negative pulse of the first pulse to the sustain electrode during the application of the first pulse to the scan electrode.

<Second Embodiment>

Since a structure of a plasma display apparatus according to a second embodiment of the present invention is substantially the same as the structure of the plasma display apparatus according to the first embodiment of the present invention, a description thereof is omitted.

Only, a scan driver and a sustain driver supply a first pulse and a second pulse, whose a polarity and a width are different from a polarity and a width of the first pulse, to a scan electrode Y and a sustain electrode Z during a sustain period, respectively.

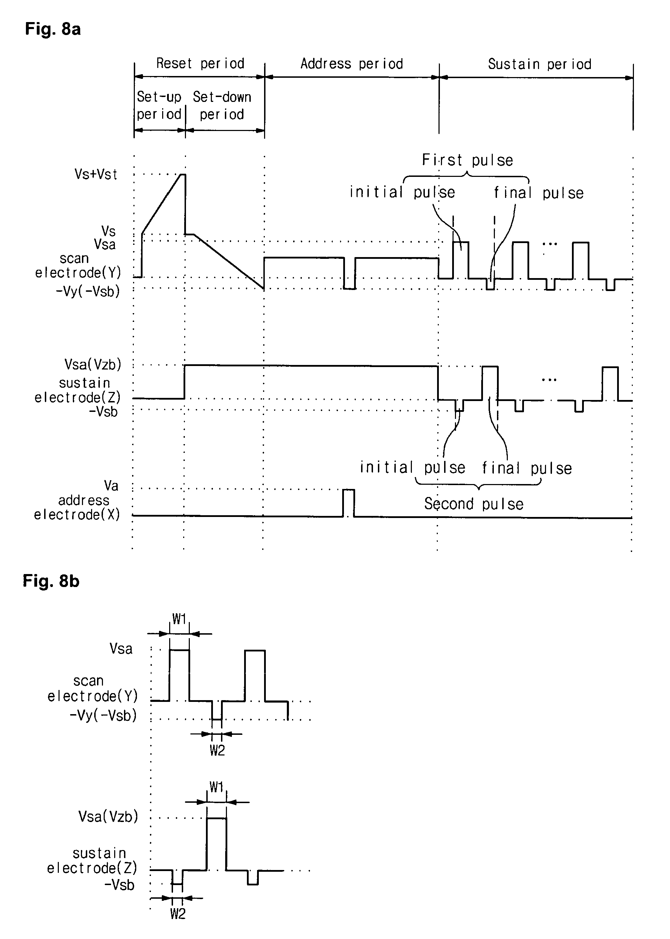

FIGS. 8a and 8b illustrate a driving method of a plasma display apparatus according to a second embodiment of the present invention.

As shown in FIG. 8a, the plasma display apparatus according to the second embodiment of the present invention, like the plasma display apparatus according to the first embodiment of the present invention, is driven by dividing each of subfields into a reset period for initializing all cells of a plasma display panel, an address period for selecting cells to be discharged and a sustain period for discharge maintenance of the selected cells. The plasma display apparatus according to the second embodiment of the present invention is driven during the reset period and the address period in the same manner as the plasma display apparatus according to the first embodiment of the present invention.

Only, when the amount of positive wall charges accumulated on the scan electrode Y at a time when the sustain period starts is less than the amount of negative wall charges accumulated on the sustain electrode Z at the time in the sustain period, the first pulse including an initial positive pulse and a final negative pulse is applied to the scan electrode Y. Further, the second pulse including an initial negative pulse of the width different from the width of the initial positive pulse of the first pulse and a final positive pulse of the width different from the width of the final negative pulse of the first pulse respectively, is applied to the sustain electrode Z during the application of the first pulse to the scan electrode Y.

At this time, a ground level voltage is maintained between the initial positive pulse and the final negative pulse applied to the scan electrode Y. Further, a ground level voltage is maintained between the initial negative pulse and the final positive pulse applied to the sustain electrode Z.

Since the sustain pulse applied during the sustain period in FIG. 8a is substantially the same as the sustain pulse according to the first embodiment of the present invention, a description thereof is omitted.

Only, as shown in FIG. 8b, a width W1 of the initial positive pulse of the first pulse supplied to the scan electrode during the sustain period is different from a width W2 of the initial negative pulse of the second pulse supplied to the sustain electrode during the sustain period. Further, a width W2 of the final negative pulse of the first pulse supplied to the scan electrode during the sustain period is different from a width W1 of the final positive pulse of the second pulse supplied to the sustain electrode during the sustain period.

More preferably, the width W1 of the initial positive pulse of the first pulse supplied to the scan electrode during the sustain period is wider than the width W2 of the initial negative pulse of the second pulse supplied to the sustain electrode during the sustain period. Further, the width W2 of the final negative pulse of the first pulse supplied to the scan electrode during the sustain period is narrower than the width W1 of the final positive pulse of the second pulse supplied to the sustain electrode during the sustain period.

As described above, the difference between the wall voltages of the scan electrode and the sustain electrode caused by the difference between the amount of wall charges of each of the scan electrode and the sustain electrode at the time when the sustain period starts is compensated by charging the widths and the polarities of the first and second pulses applied to the scan electrode and the sustain electrode. Accordingly, the stable sustain discharge is generated.

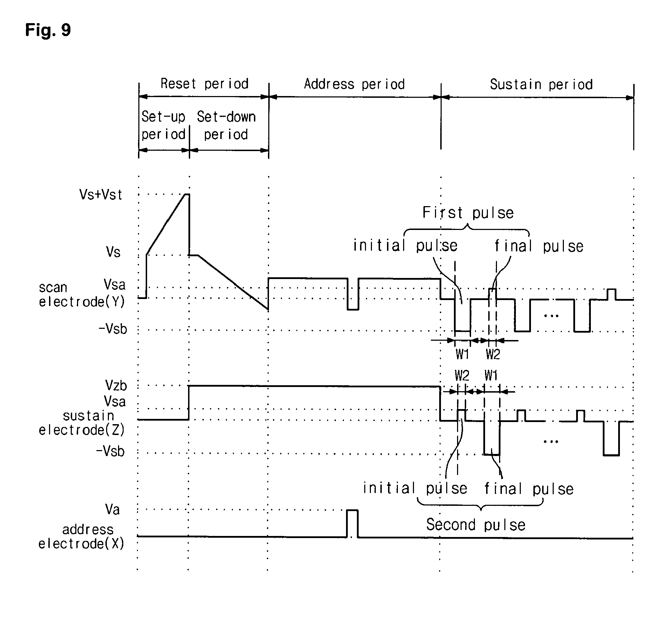

FIG. 9 illustrate a driving method of the plasma display apparatus when the amount of positive wall charges accumulated on the scan electrode at the time when the sustain period starts is more than the amount of negative wall charges accumulated on the sustain electrode at the time on driving the plasma display apparatus according to the second embodiment of the present invention.

Driving waveforms applied during a reset period and an address period in FIG. 9 are the same as the driving waveforms applied during the reset period and the address period in FIG. 8a. Only, the first pulse including the initial negative pulse and the final positive pulse is sequentially applied to the scan electrode Y during the sustain period. The second pulse including the initial positive pulse of the width W2 different from the width W1 of the initial negative pulse of the first pulse and the final negative pulse of the width W1 different from the width W2 of the final positive pulse of the first pulse is applied to the sustain electrode Z during the sustain period. An application time point of the first pulse is substantially the same as an application time point of the second pulse.

Since the sustain pulse applied during the sustain period in FIG. 9 is the same as the sustain pulse of FIGS. 8a and 8b, a description thereof is omitted.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. A plasma display apparatus comprising:
a plasma display panel comprising a scan electrode and a sustain electrode;
a scan driver for supplying a first pulse including a positive pulse and a negative pulse to the scan electrode during a sustain period; and
a sustain driver for supplying a second pulse including a negative pulse of a magnitude different from a magnitude of the positive pulse of the first pulse and a positive pulse of a magnitude different from a magnitude of the negative pulse of the first pulse to the sustain electrode during the application of the first pulse to the scan electrode.

2. The plasma display apparatus of claim 1, wherein the voltage difference between the positive pulse initially applied to the scan electrode and the negative pulse initially applied to the sustain electrode is more than the voltage differences between the remaining positive pulse applied to the scan electrode and the remaining negative pulse applied to the sustain electrode during the sustain period.

3. The plasma display apparatus of claim 1, wherein the voltage difference between the positive pulse applied to the scan electrode and the negative pulse applied to the sustain electrode and the voltage difference between the negative pulse applied to the scan electrode and the positive pulse applied to the sustain electrode each are controlled in accordance with weight values of subfields.

4. The plasma display apparatus of claim 3, wherein each of the voltage difference between the positive pulse applied to the scan electrode and the negative pulse applied to the sustain electrode and the voltage difference between the negative pulse applied to the scan electrode and the positive pulse applied to the sustain electrode in at least one of three low-level gray subfields is more than each of the voltage difference between the positive pulse applied to the scan electrode and the negative pulse applied to the sustain electrode and the voltage difference between the negative pulse applied to the scan electrode and the positive pulse applied to the sustain electrode in the remaining subfields.

5. The plasma display apparatus of claim 1, wherein an application time point of the positive pulse applied to the scan electrode is substantially the same as an application time point of the negative pulse applied to the sustain electrode, and
an application time point of the negative pulse applied to the scan electrode is substantially the same as an application time point of the positive pulse applied to the sustain electrode.

6. The plasma display apparatus of claim 1, wherein a voltage of the negative pulse applied to each of the scan electrode and the sustain electrode is substantially equal to a lowest voltage of a falling pulse applied to the scan electrode prior to the sustain period.

7. The plasma display apparatus of claim 1, wherein a voltage of the positive pulse applied to each of the scan electrode and the sustain electrode is substantially equal to a bias voltage applied to the sustain electrode.

8. The plasma display apparatus of claim 1, wherein a ground level voltage is maintained between the positive pulse and the negative pulse applied to the scan electrode and the sustain electrode.

9. A plasma display apparatus comprising:
a plasma display panel comprising a scan electrode and a sustain electrode;
a scan driver for supplying a first pulse including a positive pulse and a negative pulse to the scan electrode during a sustain period; and
a sustain driver for supplying a second pulse including a negative pulse of the width different from the width of the positive pulse of the first pulse and a positive pulse of the width different from the width of the negative pulse of the first pulse to the sustain electrode during the application of the first pulse to the scan electrode.

10. The plasma display apparatus of claim 9, wherein the voltage difference between the positive pulse initially applied to the scan electrode and the negative pulse initially applied to the sustain electrode is more than the voltage differences between the remaining positive pulse applied to the scan electrode and the remaining negative pulse applied to the sustain electrode during the sustain period.

11. The plasma display apparatus of claim 9, wherein the voltage difference between the positive pulse applied to the scan electrode and the negative pulse applied to the sustain electrode and the voltage difference between the negative pulse applied to the scan electrode and the positive pulse applied to the sustain electrode each are controlled in accordance with weight values of subfields.

12. The plasma display apparatus of claim 11, wherein each of the voltage difference between the positive pulse applied to the scan electrode and the negative pulse applied to the sustain electrode and the voltage difference between the negative pulse applied to the scan electrode and the positive pulse applied to the sustain electrode in at least one of three low-level gray subfields is more than each of the voltage difference between the positive pulse applied to the scan electrode and the negative pulse applied to the sustain electrode and the voltage difference between the negative pulse applied to the scan electrode and the positive pulse applied to the sustain electrode in the remaining subfields.

13. The plasma display apparatus of claim 9, wherein an application time point of the positive pulse applied to the scan electrode is substantially the same as an application time point of the negative pulse applied to the sustain electrode, and
an application time point of the negative pulse applied to the scan electrode is substantially the same as an application time point of the positive pulse applied to the sustain electrode.

14. The plasma display apparatus of claim 9, wherein a voltage of the negative pulse applied to each of the scan electrode and the sustain electrode is substantially equal to a lowest voltage of a falling pulse applied to the scan electrode prior to the sustain period.

15. The plasma display apparatus of claim 9, wherein a voltage of the positive pulse applied to each of the scan electrode and the sustain electrode is substantially equal to a bias voltage applied to the sustain electrode.

16. The plasma display apparatus of claim 9, wherein a ground level voltage is maintained between the positive pulse and the negative pulse applied to the scan electrode and the sustain electrode.

17. A method of driving a plasma display apparatus comprising:
supplying a first pulse including a positive pulse and a negative pulse to a scan electrode during a sustain period; and
supplying a second pulse including a negative pulse of a magnitude different from a magnitude of the positive pulse of the first pulse and a positive pulse of a magnitude different from a magnitude of the negative pulse of the first pulse to the sustain electrode during the application of the first pulse to the scan electrode

18. The method of claim 17, wherein the voltage difference between the positive pulse initially applied to the scan electrode and the negative pulse initially applied to the sustain electrode is more than the voltage differences between the remaining positive pulse applied to the scan electrode and the remaining negative pulse applied to the sustain electrode during the sustain period.

19. The method of claim 17, wherein the voltage difference between the positive pulse applied to the scan electrode and the negative pulse applied to the sustain electrode and the voltage difference between the negative pulse applied to the scan electrode and the positive pulse applied to the sustain electrode each are controlled in accordance with weight values of subfields.

20. The method of claim 19, wherein each of the voltage difference between the positive pulse applied to the scan electrode and the negative pulse applied to the sustain electrode and the voltage difference between the negative pulse applied to the scan electrode and the positive pulse applied to the sustain electrode in at least one of three low-level gray subfields is more than each of the voltage difference between the positive pulse applied to the scan electrode and the negative pulse applied to the sustain electrode and the voltage difference between the negative pulse applied to the scan electrode and the positive pulse applied to the sustain electrode in the remaining subfields.

21. The method of claim 17, wherein an application time point of the positive pulse applied to the scan electrode is substantially the same as an application time point of the negative pulse applied to the sustain electrode, and
an application time point of the negative pulse applied to the scan electrode is substantially the same as an application time point of the positive pulse applied to the sustain electrode.

22. The method of claim 17, wherein a voltage of the negative pulse applied to each of the scan electrode and the sustain electrode is substantially equal to a lowest voltage of a falling pulse applied to the scan electrode prior to the sustain period.

23. The method of claim 17, wherein a voltage of the positive pulse applied to each of the scan electrode and the sustain electrode is substantially equal to a bias voltage applied to the sustain electrode.

24. The method of claim 17, wherein a ground level voltage is maintained between the positive pulse and the negative pulse applied to the scan electrode and the sustain electrode.
